# EUROPEAN PATENT SPECIFICATION

(11) **EP 1 350 644 B1**
(45) Date of publication and mention of the grant of the patent: **15.10.2008**
(21) Application number: 03003540.6
(22) Date of filing: 17.02.2003
(51) Int. Cl.: B60G 7/00, B60G 9/00, B60G 3/14, B60G 11/27

(54) **Suspension in particular for low bed vehicles**
Aufhängung, insbesondere für Tiefladefahrzeuge
Suspension en particulier pour véhicules à plateau de chargement surbaissé

(30) Priority: 25.03.2002 IT TO20020261
(43) Date of publication of application: 08.10.2003
(73) Proprietor: ROLFO S.p.A., 12042 Bra (Cuneo) (IT)
(72) Inventor: Rolfo, Dario, 12042 Bra (CN) (IT)
(74) Representative: Garavelli, Paolo

(56) References cited:
- WO-A-01/15919
- WO-A-02/28671
- FR-A- 2 702 956

## Description

The present invention refers to a reduced-encumbrance suspension for vehicles for transporting goods, particularly vehicles for transporting vehicles.

In the field of vehicles for transporting goods (particularly trucks of the type with trailers and semitrailers), and still more in the field of vehicles for transporting vehicles, the load space available is a very importante resource, that must not be wasted and instead must be as much as possible increased, compatible with other types of constraints (above all legal constraints and constraints related to rules of the road) to which such vehicles are subjected.

The present invention will be described hereinbelow with reference to vehicles for transporting vehicles, because it is in this field that the invention itself has been devised and finds its most efficient and most satisfactory application. It will however be obvious, upon a reading of the following description, that the principles of the present invention can be equally applied to any other type of vehicles for transporting goods, in which the presence of a reduced-encumbrance suspension of the invention is a further resource and improvement.

In the field of transport of vehicles, the currently known trucks on the market were equipped with two different wheel arrangements, namely the one with a pair of wheels connected by a front axle and the one with independent wheels.

The first arrangement has problems due to the presence of the transverse front axle that does not allow to further decrease the height with respect to the ground of the vehicle load plane and therefore does not comply with what is required for new-generation vehicles.

The second arrangement, namely the one with independent wheels, allows a good flexibility in searching for lower load plane heights, but in the so-far known embodiments, it highly limits the vehicle load space as regards its width. In these embodiments, in fact, the wheel suspension elements and also the elements responsible for actuating the brakes are placed in a high position with respect to the chassis and it is therefore necessary to provide for further connection elements - typically slabs - that, due to their width encumbrance to be added to the wheel width, reduce the useful loading space next to the wheels themselves; consequently, the types of vehicles that can be loaded are strongly limited.

WO-A-0115919, FR-A-2702956 and WO-A-0228671 disclose prior art suspensions.

Object of the present invention is solving the above prior-art problems, by providing a suspension that is able to highly limit the encumbrance next to the wheels in a transport vehicle, in such a way as to leave free as much load space as possible as regards both height and width: with the suspension of the invention, the load width is limited only by the tires and related mudguards, while the suspension system does not affect it in any way.

A further object of the present invention is providing a suspension of the above-mentioned type that is efficient and very stable, allowing the connection of stabilising bars for every pair of independent wheels, highly improving the stability of the running vehicle.

The above and other objects and advantages of the invention, as will appear from the following description, are obtained by a reduced-encumbrance suspension as claimed in Claim 1. Preferred embodiments and non-trivial variations of the present invention are claimed in the dependent Claims.

The present invention will be better described by some preferred embodiments thereof, given as a non-limiting example, with reference to the enclosed drawings, in which:
- Figure 1 is a top side perspective view of an embodiment of the suspension according to the present invention;

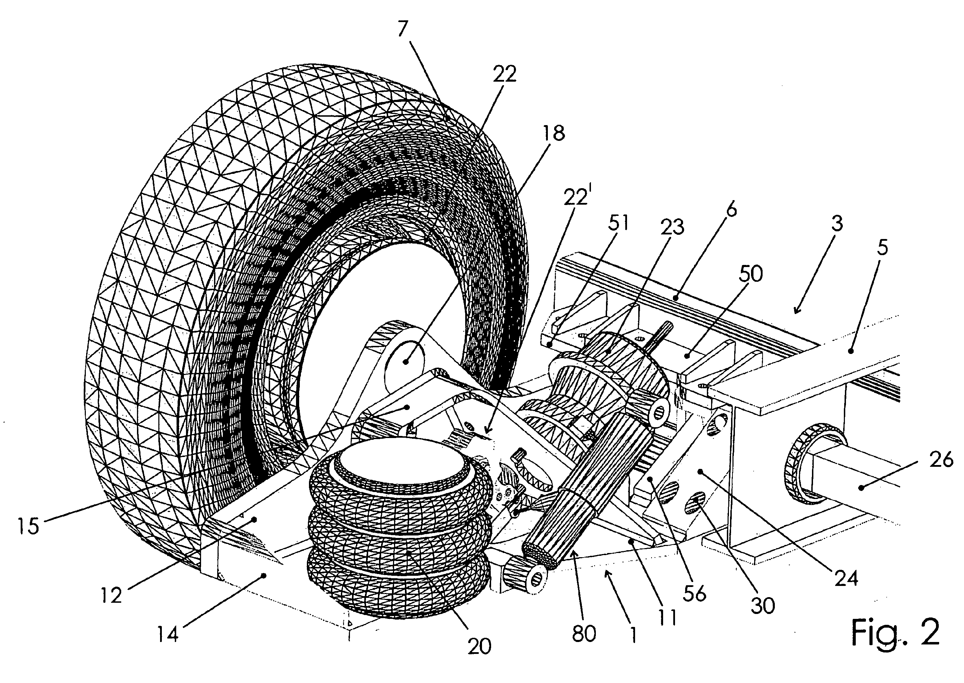

- Figure 2 is a side perspective view of the suspension in Fig. 1;
- Figure 3 is a top rear perspective view of the suspension in Fig. 1; and
- Figure 4 is a bottom perspective view of the suspension in Fig. 1.

With reference to the Figures, a preferred embodiment of the reduced-encumbrance suspension 1 of the present invention is shown and described. It will be immediately obvious to the skilled people in the art that numerous variations and modifications (for example related to shape, sizes, various colours and parts with equivalent functionalities) could be made to the described suspension without departing from the scope of the invention as claimed in the enclosed Claims.

As shown in the Figures, the reduced-encumbrance suspension 1 of the present invention can be used in vehicles for transporting goods, and particularly, but not in a limiting way, for vehicles for transporting vehicles. Such vehicles (not shown) have a chassis 3 equipped with lower longitudinal bars 5 and connection cross-members 6 placed perpendicularly to said longitudinal bars 5. Bars 5 and cross members 6 support a load plane for the goods, that is realised in various arrangements according to the goods to be transported.

The vehicle further has a plurality of wheels 7 (only one of them is shown in the drawings), of the independent type, in order to be able to realise the above-mentioned transport improvements. Each one of the wheels 7 is equipped with a respective hub 9 around which it rotates.

The reduced-encumbrance suspension 1 of the invention, that is connected to the chassis 3 through one of the cross members 6, has among its main characteristics the fact of being placed in an elongated position with respect to the lower longitudinal bar 5 of the chassis 3 and the fact of having a height that is lower that the bar 5 height: in fact, due to its arrangement that will be better described below, the suspension 1 is placed in a position that is below the position of the hub 9 of the wheel 7 coupled therewith and has such a height encumbrance that is wholly contained within the encumbrance of the cross member 6 and the mudguard (not shown), that it is anyway necessary to provide in a vehicle.

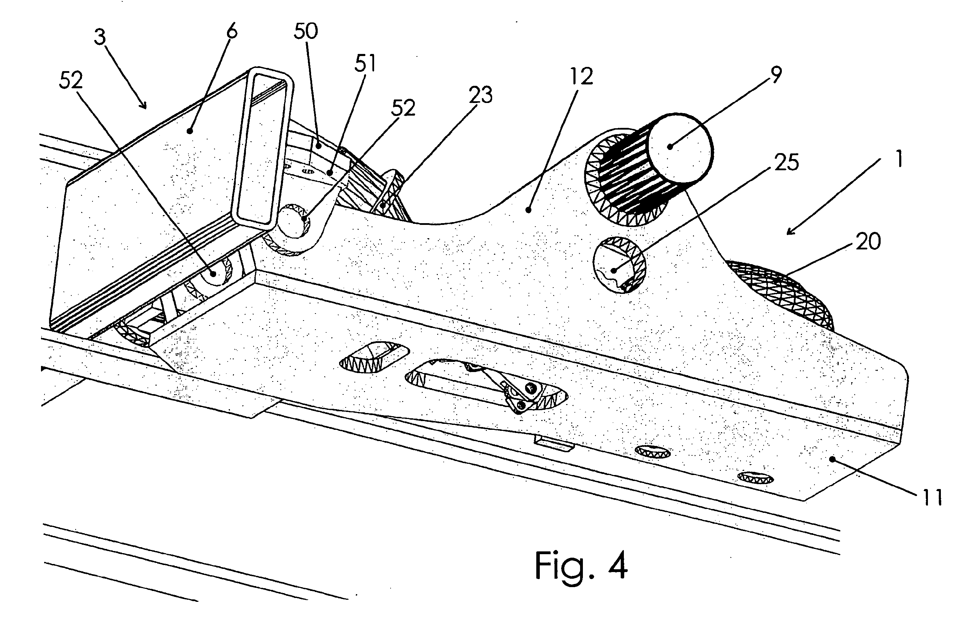

It is possible to realise this type of suspension 1 as compact and modular by providing the following major components with which it is realised: first of all, a support shelf composed of a plane elongated support base 11, as can be better seen in Fig. 4. The shape of the support base 11 is provided so that it is able to contain and support all main components of the suspension 1.

The support base 11 is equipped with a side slab 12 (shaped substantially as an elongated triangle, so that the upper vertex of the triangle comprises a hole 18 to be used for passing the hub 9 of the wheel 7), a side wall 14, a reinforcing element 15 and, on the side opposite to the wall 14, connection elements to the cross member 6.

The suspension 1 further comprises at least one shock-absorbing spring 20 (preferably of the pneumatic type) equipped with a leveling valve (not shown) to check the spring height. Commonly a horizontal plate 21 is provided as upper guard for the spring 20.

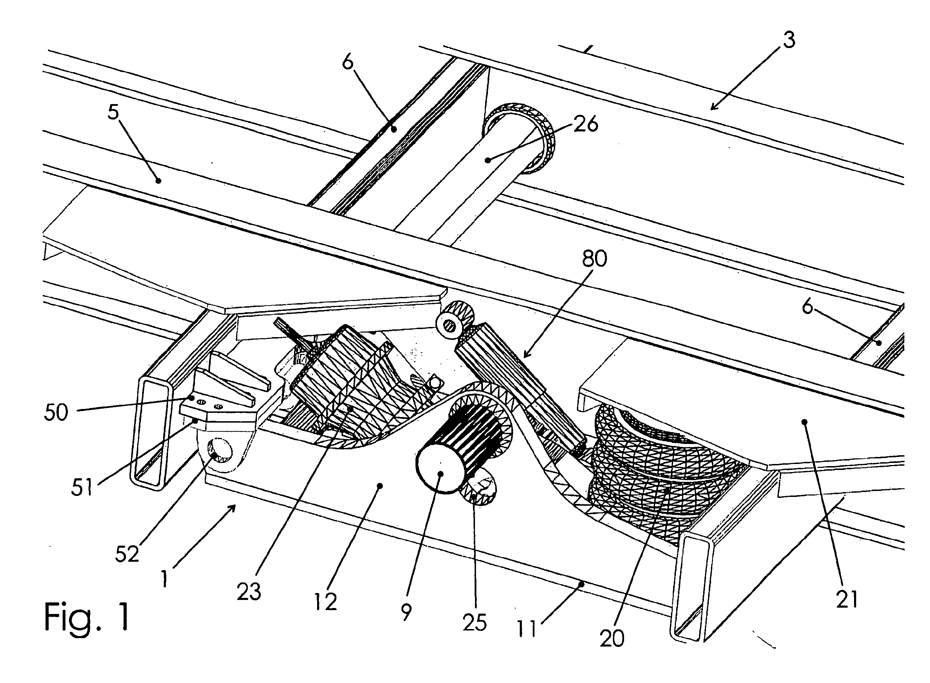

Finally, the suspension 1 comprises at least one braking assembly that operates on the wheel 7. In particular, the braking assembly (not described in detail since it is known) comprises a drum 22, a direct control element 23 with related control means 22' and a brake lever shaft (not shown), both the control element 23 and the shaft being both placed and operating below the axis of the hub 9 of the wheel 7: in fact, the brake lever shaft is adapted to penetrate into a suitable hole 25 obtained in the slab 12, where such hole 25 is placed, as can be seen in Fig. 1 and 4, under the hub 9, namely nearer to the ground than the hub 9 itself.

A shock absorber 80 is further provided, connected to the suspension 1 for the wheel 7.

As further important feature, the suspension 1 of the invention further comprises a connection element 24, which is adapted to house therein at least one torsion bar 26 for the transverse connection with the corresponding suspension 1 of another wheel (not shown) placed on the opposite side of the chassis 3.

In particular, in the preferred embodiment shown, such connection element 24 is equipped with a seat adapted to receive a torsion bar 26 of the type with substantially square-shaped section. In the connection element 24 suitable holes 30 are provided, inside which tightening means 32 penetrate for securing the torsion bar 26 to the cross member 6 of the chassis 3.

With the reduced-encumbrance suspension 1 according to the present invention, therefore, a great lowering of the fulcrum of the suspension 1 is obtained, reducing the encumbrance of the slab 12 to a minimum: the load plane is lowered, in the example arrangement currently realised and preferred, down to about 420 mm from the ground, obtaining a strong reduction in height of the whole suspension system 1, that, in the example embodiment shown, is contained into about 275 mm of height.

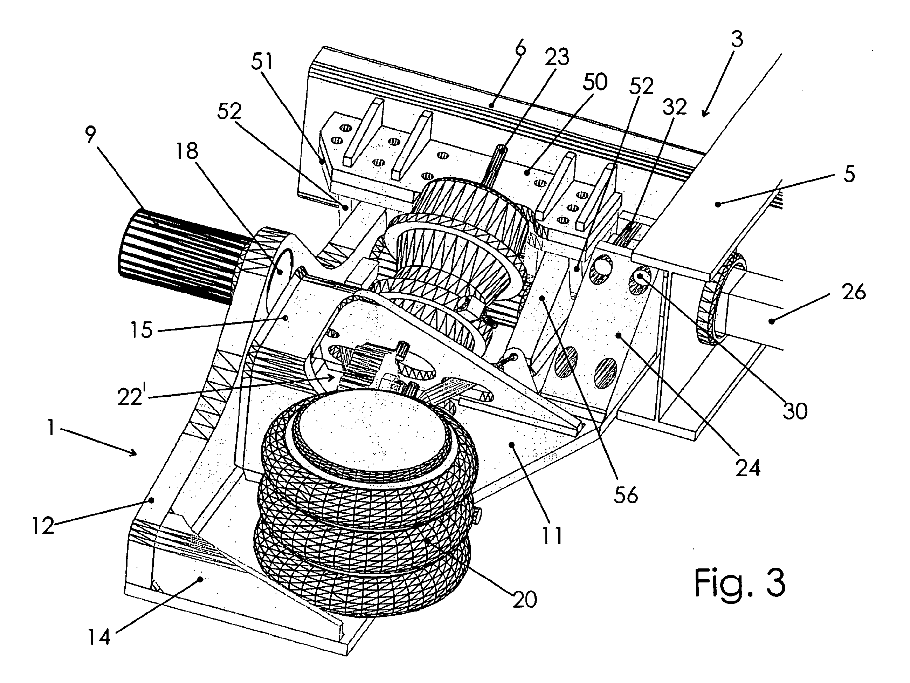

With the compact and modular arrangement of the suspension 1 object of the invention, moreover, a highly easy installation is further realised, since the suspension 1 is prepared apart and then bolted to the cross member 6 of the chassis 3 next to a connection plate 50 equipped with a connection bracket 51 in turn equipped with eyelets 52 for the passage of pins or articulated joints (not shown) also adapted to penetrate inside corresponding holes 54 obtained in the slab 12 on one hand, and inside other holes obtained in a support 56 placed on the base 11 of the suspension 1. After such securing, it is possible to insert the torsion bar 26, that is then connected to the suspension in a quick and efficient way through the connection element 24, as can be better seen in Fig. 3.

## Claims

1. Reduced-encumbrance suspension (1) for vehicles for transporting goods, particularly vehicles for transporting vehicles, said vehicles having a chassis (3) equipped with longitudinal bars (5) and connection cross-members (6) that make and support a load plane for said goods, and having a plurality of independent wheels (7) equipped with respective hubs (9), **characterised in that** said suspension (1) is connected to said chassis (3) through a respective one of said cross members (6) and is placed in an elongated position with respect to said longitudinal bar (5) of said chassis (3), **in that** said suspension (1) is placed below the load plane of said chassis (3), said suspension (1) being placed in a position that is below the position of the hub (9) of the wheel (7) coupled with said suspension (1), and **in that** said suspension (1) further comprises a connection element (24), said connection element (24) being adapted to house therein at least one torsion bar (26) for the transverse connection with the corresponding suspension (1) of another wheel (7) placed on the opposite side of said chassis (3).

2. Suspension (1) according to Claim 1, **characterised in that** it comprises:
- a support shelf composed of a plane elongated support base (11), said support base (11) being equipped with a side slab (12), a side wall (14) and a reinforcing element (15), said side slab (12) being equipped with a hole (18) through which the hub (9) of said wheel (7) passes;
- at least one shock-absorbing spring (20) equipped with a leveling valve to check the spring height, said at least one spring (20) being placed inside said support shelf; and
- at least one braking assembly contained inside said support shelf, said braking assembly being composed of a drum (22), a control element (23) and control means (22'), said control means (22') operating on said wheel (7) in a position below the axis of its hub (9).

3. Suspension (1) according to Claim 2, **characterised in that** said braking assembly comprises a direct control element (23) and a brake lever shaft both placed and operating below the axis of the hub (9) of the wheel (7), said brake lever shaft being adapted to penetrate into a hole (25) of said slab (12) placed nearer to the ground than the hub (9).

4. Suspension (1) according to Claim 1, **characterised in that** said connection element (24) is equipped with a seat adapted to receive a torsion bar (26) of the type with substantially square-shaped section.

5. Suspension (1) according to any one of Claims 2 to 4, **characterised in that** it is connected to said cross member (6) through a connection plate (50) equipped with a connection bracket (51) in turn equipped with eyelets (52) for the passage of pins or articulated joints, said pins or articulated joints being adapted to also penetrate inside corresponding holes (54) obtained in said slab (12) on one hand, and inside other holes obtained in a support (56) placed on the base (11) of the suspension (1).

6. Suspension (1) according to any one of the previous Claims, **characterised in that** it is equipped with a respective shock absorber (80).

7. Suspension (1) according to any one of Claims 2 to 6, **characterised in that** said spring (20) is of the pneumatic type.

## Patentansprüche

1. Aufhängung (1) mit reduziertem Sperrbereich für Fahrzeuge für den Warentransport, insbesondere für Fahrzeuge für den Fahrzeugtransport, die genannten Fahrzeuge haben einen Rahmen (3), der mit Längs- (5) und Querstreben zur Verbindung (6) ausgestattet ist, die eine Ladefläche der genannten Waren bilden und stützen, sie haben mehrere unabhängige Räder (7), die mit entsprechenden Radnaben (9) ausgestattet sind, die genannte Aufhängung (1) ist **dadurch gekennzeichnet, dass** sie mit dem genannten Rahmen (3) durch eine entsprechende Aufhängung der genannten Querstreben (6) verbunden und in verlängerter Position gegenüber der genannten Längsstrebe (5) des genannten Rahmens (3) angebracht ist, und durch die Tatsache, dass die genannte Aufhängung (1) unter der Ladefläche des genannten Rahmens (3) angebracht ist, die genannte Aufhängung (1) ist in einer Position angebracht, die sich unter der Position der Radnabe (9) des Rades (7), das mit der genannten Aufhängung (1) verbunden ist, befindet, und durch die Tatsache, dass die genannte Aufhängung (1) außerdem ein Verbindungselement (24) enthält, das genannte Verbindungselement (24) dient dazu, mindestens einen Torsionsstab (26) für die Querverbindung mit der entsprechenden Aufhängung (1) eines anderen Rades (7) aufzunehmen, das sich auf der entgegen gesetzten Seite des genannten Rahmens (3) befindet, zu enthalten.

2. Aufhängung (1) gemäß Patentanspruch 1, die **dadurch gekennzeichnet ist, dass** sie folgendes enthält:
- eine Haltekonsole, die aus einer verlängerten ebenen Stützbasis (11) besteht, die genannte Stützbasis (11) ist mit einer Seitenplatte (12), einer Seitenwand (14) und einem Verstärkungselement (15) ausgestattet, die genannte Seitenplatte (12) ist mit einer Bohrung (18) ausgestattet, die von der Radnabe (9) des genannten Rades (7) durchquert wird.
- mindestens eine Dämpfungsfeder (20), die mit einem Nivellierventil zur Kontrolle der Federhöhe ausgestattet ist, die genannte, mindestens eine Feder (20) ist in der genannten Haltekonsole enthalten; und
- mindestens eine Bremseinheit, die in der genannten Haltekonsole enthalten ist, die genannte Bremseinheit besteht aus einer Trommel (22), einem Steuerelement (23) und Steuervorrichtungen (22'), die genannten Steuervorrichtungen (22') wirken direkt in einer Position unter der Achse ihrer Radnabe (9) auf das genannte Rad (7) ein.

3. Aufhängung (1) gemäß Patentanspruch 2, die **dadurch gekennzeichnet ist, dass** die genannte Bremseinheit ein direktes Steuerelement (23) und eine Welle für den Bremshebel enthält, die beide unter der Achse der Radnabe (9) des Rades (7) angebracht sind und in Betrieb stehen, die genannte Welle für den Bremshebel dient dazu, in eine Bohrung (25) der genannten Platte (12) einzudringen, die sich näher am Boden befindet als die Radnabe (9).

4. Aufhängung (1) gemäß Patentanspruch 1, die **dadurch gekennzeichnet ist, dass** das genannte Verbindungselement (24) mit einer Aufnahme ausgestattet ist, die dazu dient, einen Torsionsstab (26) mit einem grundlegend quadratischen Abschnitt aufzunehmen.

5. Aufhängung (1) gemäß einem beliebigen der Patentansprüche von 2 bis 4, die **dadurch gekennzeichnet ist, dass** sie mit der genannten Querstrebe (6) durch eine Verbindungsplatte (50) verbunden ist, die mit einem Verbindungsbügel (51) ausgestattet ist, der seinerseits mit Ösen (52) für den Durchgang von Bolzen oder Gelenken versehen ist, die genannten Bolzen oder Gelenke dienen dazu, auch in die entsprechenden Bohrungen (54) einzudringen, die sich von einer Seite in der genannten Platte (12) befinden, sowie in andere Bohrungen, die sich in einer Halterung (56) befinden, die auf der Basis (11) der Aufhängung (1) angebracht ist.

6. Aufhängung (1) gemäß einem beliebigen der vorhergehenden Patentansprüche, die **dadurch gekennzeichnet ist, dass** sie mit einem entsprechenden Stoßdämpfer (80) ausgestattet ist.

7. Aufhängung (1) gemäß einem beliebigen der Patentansprüche von 2 bis 6, die **dadurch gekennzeichnet ist, dass** die genannte Feder (20) pneumatisch ist.

## Revendications

1. Suspension (1) à encombrement limité pour tous les véhicules transporteurs de marchandises, en particulier pour les véhicules transportant d'autres véhicules, lesdits véhicules ayant un châssis (3) équipé de barres longitudinales (5) et de traverses de liaison (6) qui réalisent et soutiennent un plan de chargement desdites marchandises, et possédant une pluralité de roues (7) indépendantes, chacune munie de son propre moyeu (9), **caractérisée en ce que** ladite suspension (1) est reliée audit châssis (3) par l'intermédiaire d'une respective desdites traverses (6) et placée en position allongée par rapport à ladite barre longitudinale (5) dudit châssis (3), **en ce que** ladite suspension (1) est installée au dessous du plan de chargement dudit châssis (3), ladite suspension (1) étant placée dans une position se trouvant au dessous de la position du moyeu (9) de la roue (7) accouplée à ladite suspension (1), et **en ce que** ladite suspension (1) comprend encore un élément de liaison (24), ledit élément de liaison (24) étant capable d'accueillir une barre de torsion (26) pour la liaison transversale avec la suspension correspondante (1) d'une autre roue (7) placée sur le côté opposé au châssis (3).

2. Suspension (1) selon la revendication 1, **caractérisée en ce qu'**elle comprend:
- une tablette de support composée d'une base de support plate allongée (11), ladite base de support (11) étant pourvue d'une grosse plaque latérale (12), d'une paroi latérale (14) et d'un élément de renfort (15), ladite grosse plaque latérale (12) possédant encore un orifice (18) à travers lequel passe le moyeu (9) de ladite roue (7);
- au moins un ressort (20) d'amortissement muni d'une valve de nivellement pour contrôler la hauteur du ressort, ledit au moins ressort (20) étant contenu à l'intérieur de ladite tablette de support; et
- au moins un groupe de freinage contenu à l'intérieur de ladite tablette de support, ledit groupe de freinage étant constitué d'un tambour (22), d'un élément de commande (23) et de moyens de commande (22'), lesdits moyens de commande (22') agissant sur ladite roue (7) dans une position au dessous de l'axe de son moyeu (9).

3. Suspension (1) selon la revendication 2, **caractérisée en ce que** ledit groupe de freinage comprend un élément de commande (23) direct et un arbre pour le levier du frein, les deux placés et agissant au dessous de l'axe du moyeu (9) de la roue (7), ledit arbre pour le levier du frein étant capable de pénétrer dans un orifice (25) de ladite grosse plaque (12) positionnée plus près du sol vis-à-vis du moyeu (9).

4. Suspension (1) selon la revendication 1, **caractérisée en ce que** ledit élément de liaison (24) possède un logement capable de recevoir une barre de torsion (26) du type à section essentiellement carrée.

5. Suspension (1) selon une quelconque des revendications de 2 à 4, **caractérisée en ce qu'**elle est reliée à ladite traverse (6) par l'intermédiaire d'une plaque de liaison (50) pourvue d'une bride d'attache (51) possédant à son tour des oeillets (52) pour permettre le passage d'axes ou de pivots, lesdits axes ou pivots étant capables de pénétrer à l'intérieur d'orifices correspondants (54) pratiqués sur ladite grosse plaque (12) d'une part, et dans d'autres orifices pratiqués dans un soutien (56) placé sur la base (11) de la suspension (1).

6. Suspension (1) selon une quelconque des revendications précédentes, **caractérisée en ce qu'**elle est pourvue d'un amortisseur respectif (80).

7. Suspension (1) selon une quelconque des revendications de 2 à 6, **caractérisée en ce que** ledit ressort (20) est du type pneumatique.
